(19) Europäisches Patentamt
European Patent Office
Office européen des brevets

(11) EP 0 608 888 B1

(12) EUROPÄISCHE PATENTSCHRIFT

(45) Veröffentlichungstag und Bekanntmachung des Hinweises auf die Patenterteilung:
**01.12.1999 Patentblatt 1999/48**

(51) Int Cl.6: **C08K 5/521**, C09D 183/10, C08L 83/04, C09D 183/04

(21) Anmeldenummer: **94101224.7**

(22) Anmeldetag: **27.01.1994**

# (54) Zu Elastomeren vernetzende Organopolysiloxanmassen

To elastomers crosslinkable polyorganosiloxane compositions

Compositions d'organopolysiloxanes réticulables en élastomères

(84) Benannte Vertragsstaaten:
**BE DE DK ES FR GB IT NL SE**

(30) Priorität: **28.01.1993 DE 4302393**

(43) Veröffentlichungstag der Anmeldung:
**03.08.1994 Patentblatt 1994/31**

(73) Patentinhaber: **Wacker-Chemie GmbH**
**81737 München (DE)**

(72) Erfinder:
- **Patrick, Ekkehard, Dr.**
  **D-84504 Burgkirchen (DE)**
- **Göblmeier, Walter**
  **D-84329 Rogglfing (DE)**
- **Eck, Herbert, Dr.**
  **D-84489 Burghausen (DE)**
- **Fleischmann, Gerald, Dr.**
  **D-84489 Burghausen (DE)**

(56) Entgegenhaltungen:
**EP-A- 0 246 651**
**EP-A- 0 284 085**
**FR-A- 2 023 437**
**FR-A- 2 121 133**
**FR-A- 2 372 203**
**GB-A- 989 409**
**US-A- 4 032 499**
**US-A- 4 244 911**
**US-A- 4 745 144**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 608 888 B1

Printed by Jouve, 75001 PARIS (FR)

## Beschreibung

Die Erfindung betrifft zu Elastomeren vernetzende Massen auf Grundlage von Diorganopolysiloxan und deren Verwendung.

Zu Elastomeren vernetzende Massen, enthaltend

(1) kondensationsfähige Endgruppen aufweisendes Diorganopolysiloxan,
(2) je Molekül mindestens drei hydrolysierbare Gruppen aufweisendes Silan und
(3) Katalysatoren auf Basis zinnhaltiger Verbindungen, wie Dibutylzinndilaurat,

sind bekannt. Hierzu sei auf Chemistry and Technology of Silicones, Walter Noll, Academic Press, Inc., 1968, Seiten 395 bis 397, verwiesen. Zinnkatalysatoren haben den Nachteil toxisch zu sein, was nicht immer erwünscht ist.

In US-A 4,147,855 sind unter Ausschluß von Wasser lagerfähige, bei Zutritt von Wasser bei Raumtemperatur zu Elastomeren vernetzende Massen beschrieben, die kondensationsfähige Endgruppen aufweisendes Diorganopolysiloxan, Aminosilan oder Ketoximosilan und Phosphorsäureester enthalten, wobei die Verwendung von sauren Phosphorsäureestern, also solchen mit Hydroxylgruppen, in Mengen, die über diejenige Menge hinausgehen, die durch die bei der Vernetzung freiwerdenden basischen Stickstoffverbindungen neutralisiert werden, ausgeschlossen ist. In US-A 4,147,855 ist beschrieben, daß die sauren Phosphorsäureester den Nachteil aufweisen, einen Abbau der Polymere zu bewirken. Aus US-A 4,147,855 ist weiterhin zu entnehmen, daß Elastomere mit einem niedrigen Spannungswert bei Dehnung, der insbesondere bei Fugendichtungen erwünscht ist, erhalten werden.

Aus EP-A 246 651 sind vernetzbare Zusammensetzungen bekannt, die kondensationsfähige Endgruppen aufweisendes Organopolysiloxan, Tri- oder Tetraalkoxysilan oder deren Oligomere und Silylester der Phosphorsäure enthalten. Es werden Elastomere erhalten, die auf den Unterlagen, auf denen sie aufgebracht wurden, gut haften. Die Festigkeit dieser Elastomere ist jedoch für Beschichtungen, die mechanischen Beanspruchungen ausgesetzt sind, nicht ausreichend.

Es bestand die Aufgabe, zu Elastomeren vernetzende Massen auf Grundlage von Diorganopolysiloxan bereitzustellen, die keine toxischen Härtungskatalysatoren, wie Zinnkatalysatoren, enthalten, Elastomere mit einem hohen Spannungswert bei Dehnung ergeben und sich zur Herstellung von Beschichtungen eignen. Die Aufgabe wird durch die Erfindung gelöst.

Gegenstand der Erfindung sind zu Elastomeren vernetzende Massen, enthaltend

(1) kondensationsfähige Endgruppen aufweisendes Diorganopolysiloxan, das Mischpolymerisat aus aliphatische Mehrfachbindungen aufweisenden Monomeren enthält, das durch Mischpolymerisation von aliphatische Mehrfachbindungen aufweisenden Monomeren mittels freier Radikale in Gegenwart von Diorganopolysiloxan erzeugt wurde,

(2) Silan der allgemeinen Formel

$$R_xSi(OR^1)_{4-x} ,$$

wobei R einen einwertigen, gegebenenfalls halogenierten Kohlenwasserstoffrest, vorzugsweise mit 1 bis 20 Kohlenstoffatomen je Rest,

$R^1$ einen einwertigen Kohlenwasserstoffrest, vorzugsweise mit 1 bis 8 Kohlenstoffatomen je Rest, der gegebenenfalls halogeniert und/oder durch eine oder mehrere Gruppen der Formel -O-, -S-, -C(O)O-, -N=, $-NR^5-$ oder $-SiR_2-$ unterbrochen ist, und
x 0 oder 1 bedeutet,

oder dessen Oligomer,
mit der Maßgabe, daß die Verwendung von Silanen, die spätestens bei der Vernetzung freiwerdende basische Stickstoffverbindungen erzeugen, in solchen Mengen, die über diejenigen Mengen hinausgehen, durch die die Phosphorsäureester (3) neutralisiert werden, ausgeschlossen sind, und

(3) Phosphorsäureester der allgemeinen Formel

$$O = P \begin{matrix} \diagup OR^2 \\ - OR^3 \\ \diagdown OR^3 \end{matrix} \quad ,$$

wobei $R^2$ Wasserstoff oder einen leicht abspaltbaren Rest, vorzugsweise einen Rest der Formel $SiR^4_a(OR^4)_{3-a}$ bedeutet,
$R^3$ gleich oder verschieden ist und n-Pentyl-, iso-Pentyl-, neo-Pentyl-, tert. -Pentylrest; Hexylreste, Heptylreste, Octylreste, Nonylreste, Decylreste, Dodecylreste, Octadecylreste, Alkenylreste, Cycloalkylreste, Arylreste, Alkarylreste, und Aralkylreste, oder solche der Formel $-[CH_2CH_2O]_vR^6$, $-[CH_2CH_2CH_2O]_vR^6$ und $-[CH_2CH(CH_3)O]_vR^6$, $-CH_2CH_2O[Si(CH_3)_2O]_wCH_2CH_2OH$,

wobei v eine ganze Zahl im Wert von 1 bis 10,
w eine ganze Zahl im Wert von 1 bis 20 una
$R^6$ Wasserstoff oder einen Alkyl-, Alkenyl-, Cycloalkyl-, Aryl- oder Acylrest bedeutet.

$R^4$ einen einwertigen Kohlenwasserstoffrest, vorzugsweise mit 1 bis 20 Kohlenstoffatomen je Rest, der gegebenenfalls halogeniert und/oder durch eine oder mehrere Gruppen der Formeln -O-, -S-, -C(O)O-, -N=, $-NR^5-$ oder $-SiR_2-$ unterbrochen ist,
$R^5$ Wasserstoff oder einen einwertigen Kohlenwasserstoffrest, vorzugsweise mit 1 bis 20 Kohlenstoffatomen je Rest, der gegebenenfalls halogeniert und/oder durch eine oder mehrere Gruppen der Formeln -O-, -S-, -C(O)O-, -N=, $-NR^5-$ oder $-SiR_2-$ unterbrochen ist, und
a 0, 1, 2 oder 3 bedeutet,

mit der Maßgabe, daß einer der beiden Reste $-OR^3$ bis zu 50 Mol% durch Reste -OH ersetzt sein kann.

Gegenstand der Erfindung ist weiterhin ein Verfahren zur Herstellung von zu Elastomeren vernetzenden Massen durch Vermischen von Komponenten (1), (2), (3) gemäß den zu Elastomen vernetzenden Massen sowie gegebenenfalls (4) weiteren Stoffen.

Bei den erfindungsgemäßen Massen werden im Gegensatz zu den Massen von US-A 4,147,855 nur saure Phosphorsäureester eingesetzt, d.h. solche Phosphorsäureester, die eine an das Phosphoratom gebundene Hydroxylgruppe tragen oder eine leicht abspaltbare Gruppe aufweisen, vorzugsweise eine an das Phosphoratom gebundene Gruppe der Formel $SiR^4_a(OR^4)_{3-a}$, wobei die SiOP-Bindung in Gegenwart von Wasser oder Alkohol hydrolysiert, und es erfolgt keine Neutralisation der sauren Phosphorsäureester, u.a. auch nicht durch den Bestandteil (2).

Beispiele für aliphatische Mehrfachbindungen aufweisende Monomere sind niedermolekulare ungesättigte aliphatische Kohlenwasserstoffe, wie Ethylen, Propylen und Butylen; Vinylhalogenide, wie Vinylfluorid und Vinylchlorid; Vinylester organischer Säuren, wie Vinylacetat und Vinylversatat; Styrol und ringsubstituierte Styrole sowie andere aromatische Vinylverbindungen, wie Vinylpyridin und Vinylnaphthalin; (Meth)acrylsäure und Derivate von (Meth)acrylsäure, wie Salze, Ester, Amide und Nitril von (Meth)acrylsäure sowie Methacrolein; N-Vinylverbindungen, wie N-Vinylcarbazol, N-Vinylpyrrolidon und N-Vinylcaprolactam; ethylenisch ungesättigte Gruppen aufweisende Siliciumverbindungen, wie Vinyltriethoxysilan und Methacryloxypropyltriethoxysilan; disubstituierte Ethylene vom Typ $CH_2=CX_2$, wie Vinylidenfluorid, Vinylidenchlorid, Vinylidencyanid; schließlich disubstituierte Ethylene vom Typ CHX=CHX, wie Vinylencarbonat; wobei Styrol und n-Butylacrylat bevorzugte Beispiele sind.

Vorzugsweise wird als Bestandteil (1) kondensationsfähige Endgruppen aufweisendes Diorganopolysiloxan, das Mischpolymerisat aus Styrol und n-Butylacrylat enthält, das durch Mischpolymerisation von Styrol und n-Butylacrylat mittels freier Radikale in Gegenwart von Diorganopolysiloxan erzeugt wurde, verwendet.

Kondensationsfähige Endgruppen aufweisendes Diorganopolysiloxan (1), das Mischpolymerisat aus aliphatische Mehrfachbindungen aufweisenden Monomeren, vorzugsweise Styrol und n-Butylacrylat, enthält, das durch Mischpolymerisation von aliphatische Mehrfachbindungen aufweisenden Monomeren, vorzugsweise Styrol und n-Butylacrylat, mittels freier Radikale in Gegenwart von Diorganopolysiloxan erzeugt wurde, sowie dessen Herstellung ist in US-A 3,555,109, US-A 3,776,875, US-A 3,631,087 und US-A 4,032,499 beschrieben.

Bei der Herstellung von Diorganopolysiloxan, das Mischpolymerisat aus aliphatische Mehrfachbindungen aufweisenden Monomeren, vorzugsweise Styrol und n-Butylacrylat, enthält, wird als Diorganopolysiloxan vorzugsweise solches der allgemeinen Formel

$$HO(SiR_2O)_nSiR_2OH$$

wobei R die oben dafür angegebene Bedeutung hat und n eine ganze Zahl mit einem Wert von 5 bis 2000, vorzugsweise 20 bis 200, bedeutet, eingesetzt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Nonylreste, wie der n-Nonylrest und iso-Nonylreste; Decylreste, wie der n-Decylrest und iso-Decylreste; Dodecylreste, wie der n-Dodecylrest und iso-Dodecylreste; Octadecylreste, wie der n-Octadecylrest und iso-Octadecylreste; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der $\alpha$- und der $\beta$-Phenylethylrest.

Beispiele für halogenierte Kohlenwasserstoffreste R sind Halogenalkylreste, wie der 3-Chlor-n-propylrest, der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Insbesondere wegen der leichteren Zugänglichkeit sind vorzugsweise mindestens 80 % der Anzahl der Reste R der Diorganopolysiloxaneinheiten Methylreste.

Vorzugsweise haben die Diorganopolysiloxane, in deren Gegenwart Mischpolymerisat aus aliphatische Mehrfachbindungen aufweisenden Monomeren, vorzugsweise Styrol und n-Butylacrylat, erzeugt wird, eine durchschnittliche Viskosität von 150 bis 6000 mPa·s bei 25°C.

Vorzugsweise beträgt die Menge vom Diorganopolysiloxan 20 bis 60 Gew.-%, bezogen auf das Gesamtgewicht von Diorganopolysiloxan und Mischpolymerisat aus aliphatische Mehrfachbindungen aufweisenden Monomeren, vorzugsweise Styrol und n-Butylacrylat.

Vorzugsweise bestehen die Mischpolymerisate, die in Gegenwart vom Diorganopolysiloxan durch Mischpolymerisation von Styrol und n-Butylacrylat mittels freier Radikale erzeugt wurden, zu 45 bis 75 Gew.-% aus sich von Styrol ableitenden Einheiten und zum Rest aus sich von n-Butylacrylat ableitenden Einheiten.

Vorzugsweise wird als Bestandteil (2) Silan der allgemeinen Formel

$$R_xSi(OR^1)_{4-x} ,$$

wobei R und x die oben dafür angegebene Bedeutung haben, und $R^1$ einen einwertigen, gegebenenfalls durch ein Ethersauerstoffatom substituierten Kohlenwasserstoffrest, vorzugsweise mit 1 bis 8 Kohlenstoffatomen je Rest, bedeutet,

oder dessen Oligomer verwendet.

Beispiele für Reste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest. Bevorzugt ist der Methyl- und Ethylrest. Beispiele für Kohlenwasserstoffreste $R^1$, die durch ein Ethersauerstoffatom substituiert sein können, sind der Methoxyethyl-, der Ethoxyethyl-, der Methoxy-n-propyl- und der Methoxy-iso-propylrest.

Die bei den erfindungsgemäßen Massen eingesetzten Vernetzer (2) können monomere Silane oder deren Oligomere sein, wobei die oligomeren vorzugsweise einen $SiO_2$-Gehalt von 30 bis 40 Gew.-% aufweisen.

Beispiele für die bei den erfindungsgemäßen Massen eingesetzten Silane (2) oder deren Oligomere sind Methyltriethoxysilan, Tetraethoxysilan, Ethylpolysilikate, wie Tetraethylsilikat mit einem $SiO_2$-Gehalt von etwa 40 %, das beispielsweise bei der Fa. Wacker unter dem Handelsnamen "TES 40" erhältlich ist, Isopropylpolysilikate, n-Butylpolysilikate, Methylbutoxydiethoxysilan, Dimethyltetraethoxydisiloxan, Methyltris(methoxyethoxy)silan, Methyltris(methoxy-n-propoxy)silan und Methyltris(methoxy-iso-propoxy)silan.

Silane (2) oder deren Oligomere werden bei den erfindungsgemäßen Massen in Mengen von vorzugsweise 0,1 bis 30 Gew.-%, bevorzugt 1 bis 15 Gew.-%, jeweils bezogen auf das Gesamtgewicht von (1) Diorganopolysiloxan, das Mischpolymerisat aus aliphatische Mehrfachbindungen aufweisenden Monomeren, vorzugsweise Styrol und n-Butylacrylat, enthält, eingesetzt.

Vorzugsweise wird als Bestandteil (3) Phosphorsäureester der allgemeinen Formel

$$O=P(OR^2)(OR^3)(OR^3),$$

wobei $R^2$ Wasserstoff oder einen Rest der Formel $SiR^4_a(OR^4)_{3-a}$ bedeutet,
$R^3$, die oben genannte Bedeutung hat,
$R^4$ einen einwertigen Kohlenwasserstoffrest, vorzugsweise mit 1 bis 20 Kohlenstoffatomen je Rest,
$R^5$ Wasserstoff oder einen einwertigen Kohlenwasserstoffrest, vorzugsweise mit 1 bis 20 Kohlenstoffatomen je Rest, und a 0, 1, 2 oder 3 bedeutet,

mit der Maßgabe, daß einer der beiden Reste $-OR^3$ bis zu 50 Mol% durch Reste -OH ersetzt sein kann, verwendet.

Beispiele für Reste $R^3$ sind n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Nonylreste, wie der n-Nonylrest und iso-Nonylreste; Decylreste, wie der n-Decylrest und iso-Decylreste; Dodecylreste, wie der n-Dodecylrest und iso-Dodecylreste; Octadecylreste, wie der n-Octadecylrest und iso-Octadecylreste; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste, Ethylphenylreste, o-, m-, p-Vinylphenylreste, und der Nonylphenylrest; und Aralkylreste, wie der Benzylrest, der α- und der β-Phenylethylrest.

Beispiele für die Kohlenwasserstoffreste $R^3$ unterbrechende Gruppen sind
-O-, -O-CO-, -CO-O-, $-S_y-$ (y = 1 bis 10), -N=, $-NR^5-$, $-O-(SiR_2-O)_z-$ (z = 1 bis 100), $-O-SiR_2-S_y-SiR_2-O-$ (y = 1 bis 10), $-SiR_2-N=N-SiR_2-$ und -NH-CO-O-.

Beispiele für Kohlenwasserstoffreste $R^3$, die durch eine oder mehrere Gruppen der Formeln -O-, -S-, -C(O)O-, -N=, $-NR^5-$oder $-SiR_2-$ unterbrochen sind, sind solche der Formel $-[CH_2CH_2O]_vR^6$, $-[CH_2CH_2CH_2O]_vR^6$ und $-[CH_2CH(CH_3)O]_vR^6$, $-CH_2CH_2O[Si(CH_3)_2O]_wCH_2CH_2OH$,

wobei v eine ganze Zahl im Wert von 1 bis 10,
w eine ganze Zahl im Wert von 1 bis 20 und
$R^6$ Wasserstoff oder einen Alkyl-, Alkenyl-, Cycloalkyl-, Aryl- oder Acylrest bedeutet.

Beispiele für Kohlenwasserstoffreste $R^4$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und Naphthylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der α- und der β-Phenylethylrest.

Als Rest $R^4$ ist der Methylrest bevorzugt und ein bevorzugtes Beispiel für den Rest der Formel $SiR^4_a(OR^4)_{3-a}$ ist der Trimethylsilylrest.

Beispiele für Kohlenwasserstoffreste $R^5$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und Naphthylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der α- und der β-Phenylethylrest.

Als Rest $R^5$ ist Wasserstoff, der Methyl-, Ethyl-, Hydroxyethyl- und Propylrest bevorzugt.

Beispiele für die bei den erfindungsgemäßen Massen eingesetzten Phosphorsäureester (3) sind Bis-(2-ethylhexyl)-phosphat, Tris-(trimethylsilyl)-phosphat, der sekundäre Ester von Orthophosphorsäure mit Triethylenglykol-2-ethylhexyl-ether, nämlich der Formel $O=P(OH)[(OCH_2CH_2)_3OCH_2CH(CH_2CH_2)CH_2CH_2CH_2CH_3]_2$, saure Phosphorsäureester von Epoxid-Harzen, wie in EP-A 358 096 beschrieben, sowie andere Phosphorsäureester, die im

Handel erhältlich sind und deren Zusammensetzung wie deren Herstellung beispielsweise in Marlophor®, Präzisionstenside, Hüls AG, Mai 1990, beschrieben ist.

Phosphorsäureester (3) werden bei den erfindungsgemäßen Massen in Mengen von vorzugsweise 0,1 bis 10 Gew.-%, bevorzugt 0,5 bis 5,0 Gew.-%, jeweils bezogen auf das Gesamtgewicht von (1) Diorganopolysiloxan, das Mischpolymerisat aus aliphatische Mehrfachbindungen aufweisenden Monomeren, vorzugsweise Styrol und n-Butylacrylat, enthält, eingesetzt.

Zusätzlich zu (1) Diorganopolysiloxan, das Mischpolymerisat aus aliphatische Mehrfachbindungen aufweisenden Monomeren, vorzugsweise Styrol und n-Butylacrylat, enthält, Silan (2) oder dessen Oligomer und Phosphorsäureester (3) können bei den erfindungsgemäßen Massen noch weitere Stoffe (4) mitverwendet werden, die auch bisher bei der Herstellung von zu Elastomeren vernetzenden Massen mitverwendet werden konnten.

Für die weiteren Stoffe (4) gilt, daß die Verwendung von Stoffen (4), die spätestens bei der Vernetzung freiwerdende basische Verbindungen erzeugen, in solchen Mengen, die über diejenigen Mengen hinausgehen, durch die die Phosphorsäureester (3) neutralisiert werden, ausgeschlossen ist.

Beispiele für solche zusätzlichen mitverwendbaren Stoffe (4) sind nicht verstärkende Füllstoffe, also Füllstoffe mit einer BET-Oberfläche von bis zu ca. 50 $m^2/g$, wie Calciumcarbonat, Gips, Dolomit, Bariumsulfat, Calciumsilikat, Diatomeenerde, Quarzmehl, Zirkoniumsilikat, Zeolithe, Metalloxidpulver, wie Aluminium- oder Zinkoxide bzw. deren Mischoxide, Siliciumnitrid, Siliciumcarbid, Bornitrid, Glas-, Kohle- und Kunststoffpulver und Glas- und Kunststoffhohlkugeln; verstärkende Füllstoffe, also Füllstoffe mit einer BET-Oberfläche von mehr als 50 $m^2/g$, wie pyrogen hergestellte Kieselsäure, gefällte Kieselsäure, Ruße, wie Furnace- und Acetylenruß und Silicium-Aluminium-Mischoxide großer BET-Oberfläche; und faserförmige Füllstoffe, wie Wollastonit, Asbest und Kunststoffasern. Die genannten Füllstoffe können hydrophobiert sein, beispielsweise durch die Behandlung mit längerkettigen Carbonsäuren, wie Stearinsäure, und/oder Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen eingesetzt werden. Füllstoffe werden in Mengen von vorzugsweise 1 bis 50 Gew.-%, bevorzugt 10 bis 30 Gew.-%, jeweils bezogen auf das Gesamtgewicht von Diorganopolysiloxan (1), das Mischpolymerisat aus Styrol und n-Butylacrylat enthält, eingesetzt.

Weitere Beispiele für solche zusätzlich mitverwendbaren Stoffe (4) sind Verdünnungsmittel, wie Alkangemische, Benzine, verflüssigte Gase, wie Propan, Butan und Kohlensäure ($CO_2$); anorganische und organische Pigmente, wie Buntpigmente jeder Farbe, z.B. Eisenoxide und Phthalocyaninblau, Metalleffektpigmente, Perlglanzpigmente und Fluoreszenzpigmente und Unbuntpigmente, z.B. Titandioxide und Ruße; lösliche Farbstoffe; Rheologiehilfsmittel, wie Verdicker und Thixotropiemittel, z.B. blättchenförmige Silikate, die gegebenenfalls hydrophobiert sind, wie Talkum, Bentonite und Hektorite, pyrogen hergestellte Kieselsäuren, die gegebenenfalls hydrophobiert sind, Polyacrylsäurederivate, Polyharnstoffverbindungen, Assoziativ-Verdicker, gefällte Calciumcarbonate, die gegebenenfalls hydrophobiert sind, hydrierte Rizinusöle, Carboxymethylcellulose und Stearate, wie Calciumstearat und Aluminiumstearat; Korrosionsinhibitoren; Korrosionsschutzpigmente und Metallpigmente, wie Zinkphosphate, Zinkstaub, Aluminiumpulver, Edelstahlpulver, Kupferpulver und Ionenaustauscher; Alterungsschutzmittel; Lichtschutzmittel; Mittel zur Verbesserung der Haftung der aus den erfindungsgemäßen Massen hergestellten Elastomere auf den Unterlagen, auf denen die Elastomere erzeugt wurden.

Vorzugsweise wird bei den erfindungsgemäßen Massen (1) Diorganopolysiloxan, das Mischpolymerisat aus aliphatische Mehrfachbindungen aufweisenden Monomeren, vorzugsweise Styrol und n-Butylacrylat, enthält, in Form einer Dispersion in einem Verdünnungsmittel, in dem sich das das Mischpolymerisat enthaltende Diorganopolysiloxan (1) nicht löst, eingesetzt. Beispiele für solche Verdünnungsmittel sind Alkangemische, wie Benzine mit einem für die Applikation und Trocknung geeigneten Verdunstungsverhalten bzw. Siedebereich.

Verdünnungsmittel werden in Mengen von vorzugsweise 10 bis 60 Gew.-%, bevorzugt 20 bis 40 Gew.-%, jeweils bezogen auf das Gesamtgewicht von (1) Diorganopolysiloxan, das Mischpolymerisat aus aliphatische Mehrfachbindungen aufweisenden Monomeren, vorzugsweise Styrol und n-Butylacrylat, enthält, eingesetzt.

Die erfindungsgemäßen Massen werden durch Vermischen der Bestandteile (1), (2) und (3) sowie gegebenenfalls zusätzlich mitverwendbarer Stoffe (4) hergestellt.

Bei den erfindungsgemäßen Massen handelt es sich vorzugsweise um solche, die mehr oder weniger unmittelbar vor ihrer endgültigen Formgebung durch Vermischen von mindestens zwei Komponenten bereitet werden, also um sogenannte Zweikomponentensysteme oder Mehrkomponentensysteme. Bei den Zweikomponentensystemen können sich die Bestandteile (1) und (2) in der ersten Komponente und der Bestandteil (3) in der zweiten Komponente oder der Bestandteil (1) in der ersten Komponente und die Bestandteile (2) und (3) in der zweiten Komponente befinden, wobei letzteres bevorzugt ist. Die Bestandteile (1), (2) und (3) können auch getrennt voneinander als einzelne Komponenten vorliegen.

Die Vernetzung der erfindungsgemäßen Massen erfolgt vorzugsweise bei Raumtemperatur. Die Vernetzung der erfindungsgemäßen Massen kann bei normalem Wassergehalt der Luft erfolgen. Die Vernetzung kann, falls erwünscht, auch bei höheren oder niedrigeren Temperaturen als Raumtemperatur und/oder mittels den normalen Wassergehalt der Luft übersteigenden Konzentrationen von Wasser durchgeführt werden.

Die erfindungsgemäßen Massen eignen sich ausgezeichnet zur Herstellung von Beschichtungen. Beispiele für Unterlagen, auf denen die Beschichtungen aufgebracht werden, sind Holz, Metalle, mineralische Baustoffe, wie Zement und Beton, Kunststoffe, Keramiken und gebrannte Tone.

Das Auftragen der erfindungsgemäßen Massen auf die Unterlagen kann in beliebiger, für die Herstellung von Beschichtungen geeigneter und vielfach bekannter Weise erfolgen, beispielsweise durch Streichen, Tauchen, Spritzen, Gießen, Fluten, Spachteln, Rollen oder Rakel-Beschichtung.

Zur Verbesserung der Haftung der aus den erfindungsgemäßen Massen hergestellten Elastomere auf den Unterlagen, auf denen die Elastomere erzeugt werden, können die erfindungsgemäßen Massen selbst einen Haftvermittler enthalten, beispielsweise Alkoxysilane mit reaktiven Gruppen, wie die Dicarbonsäureanhydridgruppe, Acryloxyalkylgruppe, Mercaptoalkylgruppe und Epoxyalkylgruppe, deren Oligomere oder Gemische von Alkoxysilanen und/oder deren Oligomeren, oder auf die zu beschichtenden Unterlagen wird vorher eine Grundierung aufgebracht. Beispiele für Grundierungen sind Alkoxysilane mit reaktiven Gruppen, wie die Dicarbonsäureanhydridgruppe, Acryloxyalkylgruppe, Mercaptoalkylgruppe, Epoxyalkylgruppe und Aminoalkylgruppe, deren Oligomere oder Gemische von Alkoxysilanen und/oder deren Oligomeren, Acrylat-Primer, wie silanhaltige Copolymere von (Meth)acrylsäureestern, beispielsweise käuflich erwerblich unter dem Handelsnamen "Grundierung G 901" bei der Fa. Wacker-Chemie GmbH.

**Beispiel 1:**

a) In einem Polymerisationsgefäß mit einem Innendurchmesser von 312 mm und einer Höhe von 600 mm, das mit einem 200 Umdrehungen je Minute betriebenen Ankerrührer mit einer Breite von 295 mm an der breitesten Stelle, Gaseinleitungsrohr und Rückflußkühler ausgestattet ist, wurde unter Stickstoff ein Gemisch aus 5,2 kg (50 Mol) Styrol, 4,2 kg (33 Mol) n-Butylacrylat, 4,04 kg in den endständigen Einheiten je eine Si-gebundene Hydroxylgruppe aufweisendes Dimethylpolysiloxan mit einer Viskosität von 430 mPa·s bei 25°C, 0,8 kg Wasser und 0,141 kg 1,1-Di-tert.-butylperoxy-3,3,5-trimethylcyclohexan mittels eines bei 100°C gehaltenen Wasserdampf-Mantels sieben Stunden erwärmt.

Zur Entfernung von nichtumgesetzten Monomeren und von Wasser wurde zunächst bei 100°C bis 130°C Stickstoff durch das Reaktionsgemisch geblasen und dann das Reaktionsgemisch 3 Stunden bei 16 mbar (abs.) auf 130°C erwärmt. Das so erhaltene Diorganopolysiloxan, das Mischpolymerisat aus Styrol und n-Butylacrylat enthält, das durch Mischpolymerisation von Styrol und n-Butylacrylat mittels freier Radikale in Gegenwart von Diorganopolysiloxan erzeugt wurde, hat eine Bruttozusammensetzung von 30 % Dimethylpolysiloxan, 31,5 % sich von n-Butylacrylat ableitenden Einheiten und 38,5 % sich von Styrol ableitenden Einheiten.

b) 1260 g des Diorganopolysiloxans, das Mischpolymerisat aus Styrol und n-Butylacrylat enthält und dessen Herstellung oben unter a) beschrieben wurde, wurden zu einer Mischung aus 100 g eines Alkangemisches mit einem Siedebereich von 140 bis 165°C, 30 g einer pyrogenen Kieselsäure mit einer BET-Oberfläche von 200 $m^2/g$ (käuflich erwerblich unter dem Handelsnamen "HDK N 20" bei der Fa. Wacker-Chemie GmbH) und 7,0 g einer hydrophoben, pyrogenen Kieselsäure mit einer BET-Oberfläche von 150 $m^2/g$ (käuflich erwerblich unter dem Handelsnamen "HDK H 15" bei der Fa. Wacker-Chemie GmbH) zugegeben. Die so erhaltene Mischung wurde dann mit weiteren 603 g eines Alkangemisches mit einem Siedebereich von 140 bis 165°C verdünnt.

c) 20,0 g der Mischung, dessen Herstellung oben unter b) beschrieben wurde, wurden mit 5,0 g eines Alkangemisches mit einem Siedebereich von 140 bis 165°C verdünnt. Zu dieser Mischung wurde dann eine Mischung aus 1,8 g eines Tetraethylsilikats mit einem $SiO_2$-Gehalt von 34 % und 0,8 g Bis-(2-ethylhexyl)-phosphat gegeben. Die so erhaltene Mischung wurde mit einer Rakel in einer Schichtdicke von 100 µm auf einer glatten Unterlage aufgetragen und 2 bis 3 Tage bei 23°C und 50 % relativer Luftfeuchtigkeit gelagert. Die Prüfung der Reißdehnung, der Reißfestigkeit und des Spannungswertes bei 100 % Dehnung erfolgte nach DIN 53 504 mit Normstab S 3 A. Die Ergebnisse sind in Tabelle 1 zusammengefaßt.

**Vergleichsversuch 1:**

Die Arbeitsweise von Beispiel 1 c) wurde wiederholt mit der Abänderung, daß 13,2 g eines in den endständigen Einheiten je eine Si-gebundene Hydroxylgruppe aufweisenden Dimethylpolysiloxans mit einer Viskosität von 6 000 mPa·s bei 23°C anstelle der 20 g Mischung, die Dimethylpolysiloxan, das Mischpolymerisat aus Styrol und n-Butylacrylat aufweist, enthält, und 7,8 g anstelle der 5,0 g eines Alkangemisches mit einem Siedebereich von 140 bis 165°C eingesetzt wurden. Die mechanischen Eigenschaften des Elastomers wurden, wie in Beispiel 1 c) beschrieben, bestimmt. Die Ergebnisse sind in Tabelle 1 zusammengefaßt.

Tabelle 1:

| | Beispiel 1 | Vergleichsversuch 1 |
|---|---|---|
| Reißdehnung [%] | 200 | 110 |
| Reißfestigkeit [N/mm$^2$] Spannungswert bei | 8,28 | 0,97 |
| 100 % Dehnung [N/mm$^2$] | 5,06 | 0,48 |

**Beispiel 2:**

Die Arbeitsweise von Beispiel 1 c) wurde wiederholt mit der Abänderung, daß 0,2 g Tris-(trimethylsilyl)-phosphat anstelle der 0,8 g Bis-(2-ethylhexyl)-phosphat eingesetzt wurden. Die mechanischen Eigenschaften des Elastomers wurden, wie in Beispiel 1 c) beschrieben, bestimmt. Die Ergebnisse wurden in Tabelle 2 zusammengefaßt.

**Vergleichsversuch 2:**

Die Arbeitsweise von Beispiel 2 wurde wiederholt mit der Abänderung, daß 13,2 g eines in den endständigen Einheiten je eine Si-gebundene Hydroxylgruppe aufweisenden Dimethylpolysiloxans mit einer Viskosität von 6 000 mPa·s bei 23°C anstelle der 20 g Mischung, die Dimethylpolysiloxan, das Mischpolymerisat aus Styrol und n-Butylacrylat aufweist, enthält, und 7,8 g anstelle der 5,0 g eines Alkangemisches mit einem Siedebereich von 140 bis 165°C eingesetzt wurden. Die Mischung wurde, wie in Beispiel 1 c) beschrieben, mit einer Rakel in einer Schichtdicke von 100 µm auf einer glatten Unterlage aufgetragen und 2 bis 3 Tage bei 23°C und 50 % relativer Luftfeuchtigkeit gelagert. Die Beschichtung war klebrig, so daß keine mechanischen Eigenschaften bestimmt werden konnten.

Tabelle 2:

| | Beispiel 2 | Vergleichsversuch 2 |
|---|---|---|
| Reißdehnung [%] | 119 | n.b. |
| Reißfestigkeit [N/mm$^2$] Spannungswert bei | 7,76 | n.b. |
| 100 % Dehnung [N/mm$^2$] | 5,00 | n.b. |
| n.b. = nicht bestimmbar | | |

**Beispiel 3:**

Die Arbeitsweise von Beispiel 1 wurde wiederholt mit der Abänderung, daß 0,8 g des sekundären Esters von Orthophosphorsäure mit Triethylenglykol-2-ethylhexylether (käuflich erwerblich unter dem Handelsnamen "Marlophor FC-Säure" bei der Hüls AG) anstelle 0,8 g Bis-(2-ethylhexyl)phosphat eingesetzt wurden und daß die Schichtdicke 120 µm anstelle 100 µm betrug. Die mechanischen Eigenschaften des Elastomers wurden, wie in Beispiel 1 c) beschrieben, bestimmt. Die Ergebnisse wurden in Tabelle 3 zusammengefaßt.

**Vergleichsversuch 3:**

Die Arbeitsweise von Beispiel 3 wurde wiederholt mit der Abänderung, daß 13,2 g eines in den endständigen Einheiten je eine Si-gebundene Hydroxylgruppe aufweisenden Dimethylpolysiloxans mit einer Viskosität von 6 000 mPa·s bei 23°C anstelle der 20 g Mischung, die Dimethylpolysiloxan, das Mischpolymerisat aus Styrol und n-Butylacrylat aufweist, enthält, und 7,8 g anstelle der 5,0 g eines Alkangemisches mit einem Siedebereich von 140 bis 165°C eingesetzt wurden. Die mechanischen Eigenschaften des Elastomers wurden, wie in Beispiel 1 c) beschrieben, bestimmt. Die Ergebnisse wurden in Tabelle 3 zusammengefaßt.

Tabelle 3:

| | Beispiel 3 | Vergleichsversuch 3 |
|---|---|---|
| Reißdehnung [%] | 244 | 196 |
| Reißfestigkeit [N/mm$^2$] Spannungswert bei | 8,15 | 0,46 |
| 100 % Dehnung [N/mm$^2$] | 5,49 | 0,26 |

**Beispiel 4:**

Analog der in Beispiel 1 a) beschriebenen Herstellung wurde ein Diorganopolysiloxan, das Mischpolymerisat aus Styrol und n-Butylacrylat enthält, das durch Mischpolymerisation von Styrol und n-Butylacrylat mittels freier Radikale in Gegenwart von Diorganopolysiloxan erzeugt wurde, erhalten, das eine Bruttozusammensetzung von 40 % Dimethylpolysiloxan, 33 % sich von n-Butylacrylat ableitenden Einheiten und 27 % sich von Styrol ableitenden Einheiten hat. Es wurde eine Mischung analog Beispiel 1 b) hergestellt. 20 g dieser Mischung wurden mit 5 g eines Alkangemisches mit einem Siedebereich von 140 bis 165°C verdünnt. Zu dieser Mischung wurde dann eine Mischung aus 1,8 g eines Tetraethylsilikats mit einem $SiO_2$-Gehalt von 34 % und 0,8 g Bis(2-ethylhexyl)-phosphat gegeben. Die so erhaltene Mischung wurde mit einer Rakel in einer Schichtdicke von 100 µm auf einer glatten Unterlage aufgetragen und 2 bis 3 Tage bei 23°C und 50 % relativer Luftfeuchtigkeit gelagert. Die mechanischen Eigenschaften wurden, wie in Beispiel 1 c) beschrieben, bestimmt. Die Ergebnisse sind in Tabelle 4 zusammengefaßt.

Tabelle 4:

| | Beispiel 4 |
|---|---|
| Reißdehnung [%] | 248 |
| Reißfestigkeit [N/mm$^2$] Spannungswert bei | 6,27 |
| 100 % Dehnung [N/mm$^2$] | 2,23 |

**Beispiel 5:**

Die Arbeitsweise von Beispiel 4 wurde wiederholt mit der Abänderung, daß 0,2 g Tris-(trimethylsilyl)-phosphat anstelle von 0,8 g Bis-(2-ethylhexyl)-phosphat eingesetzt wurden. Die mechanischen Eigenschaften des Elastomers wurden, wie in Beispiel 1 c) beschrieben, bestimmt. Die Ergebnisse sind in Tabelle 5 zusammengefaßt.

Tabelle 5:

| | Beispiel 5 |
|---|---|
| Reißdehnung [%] | 333 |
| Reißfestigkeit [N/mm$^2$] Spannungswert bei | 6,87 |
| 100 % Dehnung [N/mm$^2$] | 2,52 |

## Patentansprüche

**1.** Zu Elastomeren vernetzende Massen, enthaltend

(1) kondensationsfähige Endgruppen aufweisendes Diorganopolysiloxan, das Mischpolymerisat aus aliphatische Mehrfachbindungen aufweisenden Monomeren enthält, das durch Mischpolymerisation von aliphatische Mehrfachbindungen aufweisenden Monomeren mittels freier Radikale in Gegenwart von Diorganopolysiloxan erzeugt wurde,

(2) Silan der allgemeinen Formel

$$R_xSi(OR^1)_{4-x} ,$$

wobei R einen einwertigen, gegebenenfalls halogenierten Kohlenwasserstoffrest,

$R^1$ einen einwertigen Kohlenwasserstoffrest, der gegebenenfalls halogeniert und/oder durch eine oder mehrere Gruppen der Formeln -O-, -S-, -C(O)O-, -N=, -$NR^5$- oder -$SiR_2$- unterbrochen ist, und
x 0 oder 1 bedeutet,

oder dessen Oligomer,
mit der Maßgabe, daß die Verwendung von Silanen, die spätestens bei der Vernetzung freiwerdende basische Stickstoffverbindungen erzeugen, in solchen Mengen, die über diejenigen Mengen hinausgehen, durch die die Phosphorsäureester (3) neutralisiert werden, ausgeschlossen sind, und

(3) Phosphorsäureester der allgemeinen Formel

```
          OR²
         /
O = P - OR³     ,
         \
          OR³
```

wobei $R^2$ Wasserstoff oder einen leicht abspaltbaren Rest bedeutet,
Reste $R^3$ die gleich oder verschieden sind, n-Pentyl-, iso-Pentyl-, neo-Pentyl-, tert.-Pentylrest; Hexylreste, Heptylreste, Octylreste, Nonylreste, Decylreste, Dodecylreste, Octadecylreste, Alkenylreste, Cycloalkylreste, Arylreste, Alkarylreste, und Aralkylreste, oder solche der Formel $-[CH_2CH_2O)_vR^6$, $-[CH_2CH_2CH_2O]_vR^6$ und $-[CH_2CH(CH_3)O)_vR^6$, $-CH_2CH_2O[Si(CH_3)_2O]_wCH_2CH_2OH$,
wobei v eine ganze Zahl im Wert von 1 bis 10,
w eine ganze Zahl im Wert von 1 bis 20 und
$R^6$ Wasserstoff oder einen Alkyl-, Alkenyl-, Cycloalkyl-, Aryl- oder Acylrest bedeutet,
und
$R^5$ Wasserstoff oder einen einwertigen Kohlenwasserstoffrest, der gegebenenfalls halogeniert und/oder durch eine oder mehrere Gruppen der Formel -O-, -S-, -C(O)O-, -N=, $-NR^5-$ oder $-SiR_2-$ unterbrochen ist,

bedeutet,
mit der Maßgabe, daß einer der beiden Reste $-OR^3$ bis zu 50 Mol% durch Reste -OH ersetzt sein kann.

**2.** Massen nach Anspruch 1, dadurch gekennzeichnet, daß im Bestandteil (1) die Menge des Diorganopolysiloxanes 20 bis 60 Gew.-%, bezogen auf das Gesamtgewicht von Diorganopolysiloxan und Mischpolymerisat aus aliphatische Mehrfachbindungen aufweisenden Monomeren, beträgt.

**3.** Massen nach Anspruch 1 oder 2, dadurch gekennzeichnet, daß als Bestandteil (1) kondensationsfähige Endgruppen aufweisendes Diorganopolysiloxan, das Mischpolymerisat aus Styrol und n-Butylacrylat enthält, das durch Mischpolymerisation von Styrol und n-Butylacrylat mittels freier Radikale in Gegenwart von Diorganopolysiloxan erzeugt wurde, verwendet wird.

**4.** Massen nach Anspruch 3, dadurch gekennzeichnet, daß in Bestandteil (1) das Mischpolymerisat zu 45 bis 75 Gew.-% aus sich von Styrol ableitenden Einheiten und zum Rest aus sich von n-Butylacrylat ableitenden Einheiten besteht.

**5.** Massen nach einem der Ansprüche 1 bis 4, dadurch gekennzeichnet, daß als Bestandteil (2) Silan der allgemeinen Formel

$$R_xSi(OR^1)_{4-x} ,$$

wobei R einen einwertigen, gegebenenfalls halogenierten Kohlenwasserstoffrest,
$R^1$ einen einwertigen, gegebenenfalls durch ein Ethersauerstoffatom substituierten Kohlenwasserstoffrest und x 0 oder 1 bedeutet,
oder dessen Oligomer verwendet wird.

**6.** Massen nach einem der Ansprüche 1 bis 5, dadurch gekennzeichnet, daß als Bestandteil (3) Phosphorsäureester der allgemeinen Formel

```
           OR²
          /
O = P  -  OR³        ,
          \
           OR³
```

wobei $R^2$ Wasserstoff oder einen Rest der Formel $SiR^4_a(OR^4)_{3-a}$ bedeutet,
$R^3$ die oben genannte Bedeutung hat
$R^4$ einen einwertigen Kohlenwasserstoffrest,
a 0, 1, 2 oder 3 bedeutet,

mit der Maßgabe, daß einer der beiden Reste $-OR^3$ bis zu 50 Mol% durch Reste -OH ersetzt sein kann, verwendet wird.

**7.** Massen nach einem der Ansprüche 1 bis 6, dadurch gekennzeichnet, daß (1) Diorganopolysiloxan, das Mischpolymerisat aus aliphatische Mehrfachbindungen aufweisenden Monomeren enthält, in Form einer Dispersion eingesetzt wird.

**8.** Verfahren zur Herstellung von zu Elastomeren vernetzenden Massen durch Vermischen von Komponenten (1), (2), (3) gemäß Anspruch 1 sowie gegebenenfalls (4) weiteren Stoffen.

**9.** Verwendung der Massen nach einem der Ansprüche 1 bis 8 zur Herstellung von Beschichtungen.

**Claims**

**1.** Compositions which crosslink to give elastomers and comprise

(1) diorganopolysiloxane which contains end groups capable of condensation and comprises a copolymer of monomers containing aliphatic multiple bonds, which has been produced by copolymerization of monomers containing aliphatic multiple bonds by means of free radicals in the presence of diorganopolysiloxane,
(2) silanes of the general formulae

$$R_xSi(OR^1)_{4-x} ,$$

in which R denotes a monovalent, optionally halogenated hydrocarbon radical,

$R^1$ denotes a monovalent hydrocarbon radical, which is optionally halogenated and/or interrupted by one or more groups of the formulae -O-, -S-, -C(O)O-, -N=, $-NR^5-$ or $-SiR_2-$, and
x denotes 0 or 1,

or an oligomer thereof,
with the proviso that the use of silanes which produce basic nitrogen compounds, liberated at the latest during crosslinking, in amounts which exceed those by which the phosphoric acid esters (3) are neutralized, is excluded, and
(3) phosphoric acid esters of the general formula

$$
\begin{array}{l}
\qquad\quad OR^2 \\
\qquad\ / \\
O = P - OR^3 \\
\qquad\ \backslash \\
\qquad\quad OR^3
\end{array}
\quad ,
$$

in which $R^2$ denotes hydrogen or a radical which can easily be split off,
radicals $R^3$, which are identical or different, are n-pentyl, iso-pentyl, neo-pentyl, tert-pentyl radical; hexyl radicals, heptyl radicals, octyl radicals, nonyl radicals, decyl radicals, dodecyl radicals, octadecyl radicals, alkenyl radicals, cycloalkyl radicals, aryl radicals, alkaryl radicals and aralkyl radicals, or those of the formula
$-[CH_2CH_2O]_vR^6$, $-[CH_2CH_2CH_2O]_vR^6$ and $-[CH_2CH(CH_3)O]_vR^6$, $-CH_2CH_2O[Si(CH_3)_2O]_wCH_2CH_2OH$, where v denotes a whole number of the value from 1 to 10,
w denotes a whole number of the value from 1 to 20 and
$R^6$ denotes hydrogen or an alkyl, alkenyl, cycloalkyl, aryl or acyl radical and
$R^5$ denotes hydrogen or a monovalent hydrocarbon radical, which is optionally halogenated and/or interrupted by one or more groups of the formula -O-, -S-, -C(O)O-, -N=, $-NR^5-$ or $-SiR_2-$,

with the proviso that up to 50 mol % of one of the two radicals $-OR^3$ can be replaced by radicals -OH.

**2.** Compositions according to Claim 1, characterized in that, in constituent (1), the amount of diorganopolysiloxane is 20 to 60 % by weight, based on the total weight of diorganopolysiloxane and copolymer of monomers containing aliphatic multiple bonds.

**3.** Compositions according to Claim 1 or 2, characterized in that diorganopolysiloxane which contains end groups which are capable of condensation and comprises a copolymer of styrene and n-butyl acrylate which has been produced by copolymerization of styrene and n-butyl acrylate by means of free radicals in the presence of diorganopolysiloxane is used as constituent (1).

**4.** Compositions according to Claim 3, characterized in that, in constituent (1), the copolymer comprises units derived from styrene to the extent of 45 to 75 % by weight and units derived from n-butyl acrylate as the remainder.

**5.** Compositions according to one of Claims 1 to 4, characterized in that a silane of the general formula

$$R_xSi(OR^1)_{4-x} ,$$

in which R denotes a monovalent, optionally halogenated hydrocarbon radical,
$R^1$ denotes a monovalent hydrocarbon radical which is optionally substituted by an ether oxygen atom and x denotes 0 or 1,
or an oligomer thereof, is used as constituent (2).

**6.** Compositions according to one of Claims 1 to 5, characterized in that a phosphoric acid ester of the general formula

```
          OR²
         /
  O = P - OR³      ,
         \
          OR³
```

in which $R^2$ denotes hydrogen or a radical of the formula $SiR(OR^4)_{3-a}$,
$R^3$ has the abovementioned meaning,
$R^4$ denotes a monovalent hydrocarbon radical and a denotes 0, 1, 2 or 3,

with the proviso that up to 50 mol % of one of the two radicals $-OR^3$ can be replaced by radicals -OH, is used as constituent (3).

**7.** Compositions according to one of Claims 1 to 6, characterized in that (1) diorganopolysiloxane which comprises a copolymer of monomers containing aliphatic multiple bonds is employed in the form of a dispersion.

**8.** Process for the preparation of compositions which crosslink to give elastomers, by mixing components (1), (2), (3) according to Claim 1, and optionally (4) further substances.

**9.** Use of the compositions according to one of Claims 1 to 8 for the production of coatings.

## Revendications

**1.** Compositions réticulables en élastomères, comprenant :

(1) un diorganopolysiloxane présentant des groupements terminaux condensables, qui contient un copolymère de monomères aliphatiques à liaisons multiples, qui a été produit par copolymérisation de monomères aliphatiques à liaisons multiples au moyen de radicaux libres en présence de diorganopolysiloxane,
(2) un silane de formule générale :

$$R_xSi(OR^1)_{4-x},$$

dans laquelle R désigne un radical hydrocarboné monovalent éventuellement halogéné,

$R^1$ désigne un radical hydrocarboné monovalent, qui est éventuellement halogéné et/ou est interrompu par un ou plusieurs groupements de formules -O-, -S-, -C(O)O-, -N=, $-NR^5-$ ou $-SiR_2-$, et
x désigne 0 ou 1,

ou son oligomère,
à condition d'exclure l'utilisation de silanes, qui produisent des composés d'azote basiques libérés au plus tard lors de la réticulation, en quantités qui dépassent celles qui neutralisent les esters d'acide phosphorique (3), et
(3) des esters d'acide phosphorique de formule générale :

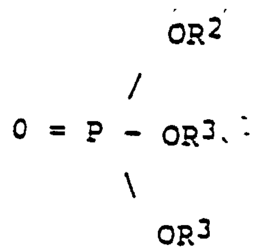

dans laquelle $R^2$ désigne de l'hydrogène ou un radical aisément décomposable,
les radicaux $R^3$, qui sont identiques ou différents, sont des radicaux n-pentyle, isopentyle, néopentyle, tert.-pentyle; des radicaux hexyle, des radicaux heptyle, des radicaux octyle, des radicaux nonyle, des radicaux décyle, des radicaux dodécyle, des radicaux octadécyle, des radicaux alcényle, des radicaux cycloalkyle, des radicaux aryle, des radicaux alkaryle et des radicaux aralkyle, ou ceux de formules -$[CH_2CH_2O]_vR^6$, -$[CH_2CH_2CH_2O]_vR^6$ et -$[CH_2CH(CH_3)O]_vR^6$, -$CH_2CH_2O[Si(CH_3)_2O]_wCH_2CH_2OH$,
dans lesquelles v est un nombre entier d'une valeur de 1 à 10,
w est un nombre entier d'une valeur de 1 à 20, et
$R^6$ désigne de l'hydrogène ou un radical alkyle, alcényle, cycloalkyle, aryle ou acyle, et
$R^5$ désigne de l'hydrogène ou un radical hydrocarboné monovalent, qui est éventuellement halogéné et/ou interrompu par un ou plusieurs groupements de formules -O-, -S-, -C(O)O-, -N=, -$NR^5$- ou -$SiR_2$-,

à condition que l'un des deux radicaux -$OR^3$ puisse être remplacé jusqu'à 50% en moles par des radicaux -OH.

**2.** Compositions selon la revendication 1, caractérisées en ce que, dans le composant (1), la quantité du diorganopolysiloxane est de 20 à 60% en poids par rapport au poids total du diorganopolysiloxane et du copolymère de monomères aliphatiques à liaisons multiples.

**3.** Compositions selon la revendication 1 ou 2, caractérisées en ce qu'on utilise comme composant (1) un diorganopolysiloxane présentant des groupements terminaux condensables, qui contient un copolymère de styrène et d'acrylate de n-butyle, qui a été produit par copolymérisation de styrène et d'acrylate de n-butyle au moyen de radicaux libres en présence de diorganopolysiloxane.

**4.** Compositions selon la revendication 3, caractérisées en ce que, dans le composant (1), le copolymère est constitué, pour 45 à 75% en poids, d'unités dérivées du styrène et, pour le reste, d'unités dérivées de l'acrylate de n-butyle.

**5.** Compositions selon l'une des revendications 1 à 4, caractérisées en ce qu'on utilise comme composant (2) un silane de formule générale :

$$R_xSi(OR^1)_{4-x}$$

dans laquelle R désigne un radical hydrocarboné monovalent éventuellement halogéné,
$R^1$ désigne un radical hydrocarboné monovalent éventuellement substitué par un atome d'oxygène d'éther et x désigne 0 ou 1,
ou son oligomère.

**6.** Compositions selon l'une des revendications 1 à 5, caractérisées en ce qu'on utilise comme composant (3) un ester d'acide phosphorique de formule générale :

$$
\begin{array}{l}
\qquad\qquad OR^2 \\
\qquad\quad / \\
O = P - OR^3, \\
\qquad\quad \backslash \\
\qquad\qquad OR^3
\end{array}
$$

dans laquelle $R^2$ désigne de l'hydrogène ou un radical de formule $SIR(OR^4)_{3-a}$,
$R^3$ a la signification mentionnée ci-dessus,
$R^4$ désigne un radical hydrocarboné monovalent, a désigne 0, 1, 2 ou 3,

à condition que l'un des deux radicaux $-OR^3$ puisse être remplacé jusqu'à au moins 50% en moles par des radicaux -OH.

**7.** Compositions selon l'une des revendications 1 à 6, caractérisées en ce qu'on utilise (1) le diorganopolysiloxane qui contient un copolymère de monomères aliphatiques à liaisons multiples, sous la forme d'une dispersion.

**8.** Procédé de préparation de compositions réticulables en élastomères par mélange des composants (1), (2) et (3) selon la revendication 1, et éventuellement (4) d'autres substances.

**9.** Utilisation des compositions selon l'une des revendications 1 à 8 pour préparer des revêtements.